# EUROPEAN PATENT APPLICATION

(11) **EP 2 031 379 A1**
(43) Date of publication of application: **04.03.2009**
(21) Application number: 07112572.8
(22) Date of filing: 16.07.2007
(51) Int. Cl.: G01N 23/04, G01T 1/24

(54) **Detector assembly and inspection system**

(71) Applicant: GENERAL ELECTRIC COMPANY, Schenectady, NY 12345 (US)
(72) Inventor: Gordon III, Clarence Lavere, Glenville, WA 12302 (US); Bueno, Clifford, Clifton Park, NY 12065 (US); Dixon, Elizabeth Lokenberg, Delanson, NY 12053 (US); Nieters, Edward James, Burnt Hills, NY 12027 (US); Ross, William Robert, Rotterdam, NY 12306 (US); Bossi, Richard Henry, Renton, WA 98057 (US); Hutchinson, Michael Craig, Kent, WA 98042 (US)
(74) Representative: Bedford, Grant Richard

(57) **Abstract**

A detector assembly (14) is provided. The detector assembly (14) includes a configurable x-ray detector (20) having an area no greater than 10.2 centimeters (cm) ×10.2 centimeters (cm) and an embedded controller (22) coupled to the configurable x-ray detector (20) and configured to control the configurable x-ray detector (20) and to format image data from the configurable x-ray detector (20) for wireless transmission. The detector assembly (14) also includes a wireless transmission device (24) configured to wirelessly transmit the image data to a user interface device (18) and a power storage device (26) configured to provide electrical power to the configurable x-ray detector (20), the wireless transmission device (24) and to the embedded controller (22).

## Description

The invention relates generally to detector systems and, more particularly, to a small area, lightweight, wireless detector system that is configured to generate, process and transmit a digital x-ray image for non-destructive testing (NDT) applications.

Various types of detector systems are known and are in use in different applications. For example, x-ray inspection systems are employed in NDT applications for detecting product structural flaws and foreign object contaminations without any product damage. Unfortunately, in many NDT applications, such systems cannot be used because of large detector size, heavy weight and requirement of additional components like heavy power supplies and fragile cabling. Further, certain applications, such as aerospace and oil and gas industries require portable, lightweight detector systems that can be maneuvered into tight access locations.

In certain systems, large areas detectors are employed that store the acquired image data locally on the device or on a memory card that can be retrieved later. However, such devices are limited in acquisition modes in which they can operate and are also not capable of linking with other data networks or controlling other devices such as x-ray sources. Certain other systems employ detectors that are battery operated but transmit data only through a wire. However, such detectors typically have a basic software application that controls only the detector and cannot be linked to the NDT workflow. Further, such detectors are not capable of controlling an x-ray source or to prepare the images into a standard NDT image format.

Accordingly, it would be desirable to develop a detector system for non-destructive testing (NDT) applications that has reduced weight and size. It would also be advantageous to develop a wireless detector system that has a capability to deliver real time and static x-ray image and is configurable for a wide range of NDT applications.

Briefly, according to one embodiment a detector assembly is provided. The detector assembly includes a configurable x-ray detector having an area no greater than 10.2 centimeters (cm) x 10.2 centimeters (cm) and an embedded controller coupled to the configurable x-ray detector and configured to control the configurable x-ray detector and to format image data from the configurable x-ray detector for wireless transmission. The detector assembly also includes a wireless transmission device configured to wirelessly transmit the image data to a user interface device and a power storage device configured to provide electrical power to the configurable x-ray detector, the wireless transmission device and to the embedded controller.

In another embodiment, a detector assembly is provided. The detector assembly includes a configurable x-ray detector and an embedded controller coupled to the configurable x-ray detector and configured to control the detector and to format image data from the configurable x-ray detector for wireless transmission. The detector assembly also includes a wireless transmission device configured to wirelessly transmit the image data to a user interface device and a power storage device configured to provide electrical power to the configurable x-ray detector, the wireless transmission device and to the embedded controller. The weight of the detector assembly is less than or equal to 2.27 kg.

In another embodiment, an inspection system is provided. The inspection system includes a detector assembly configured to obtain image data corresponding to an object. The detector assembly includes a configurable x-ray detector having an area no greater than 10.2 cm × 10.2 cm and an embedded controller coupled to the configurable x-ray detector and configured to control the configurable x-ray detector and to format image data from the configurable x-ray detector for wireless transmission. The detector assembly also includes a wireless transmission device configured to wirelessly transmit the image data and a power storage device configured to provide electrical power to the configurable x-ray detector, the wireless transmission device and to the embedded controller. The inspection system also includes a user interface device configured to receive the image data from the configurable x-ray detector via the wireless transmission device and to save the image data in a pre-determined format for use in a non-destructive testing (NDT) application.

Various features, aspects, and advantages of the present invention will become better understood when the following detailed description is read with reference to the accompanying drawings in which like characters represent like parts throughout the drawings, wherein:
FIG. 1 is a diagrammatical representation of a NDT x-ray detector system, in accordance with an exemplary embodiment of the present technique.
FIG. 2 is a diagrammatical representation of exemplary software architecture of the NDT x-ray detector system of FIG. 1.
FIG. 3 is a diagrammatical representation of components of the software architecture of the NDT x-ray detector system of FIG. 2.
FIG. 4 is a graphical representation of counts obtained with an exemplary complementary metal oxide semiconductor (CMOS) detector using two exemplary scintillators.
FIG. 5 is a graphical representation of signal-to-noise ratios (SNR) for the CMOS detector equipped with the two exemplary scintillators.
FIG. 6 is a graphical representation of the modulation transfer function (MTF) achieved using the CMOS detector with the two scintillators.

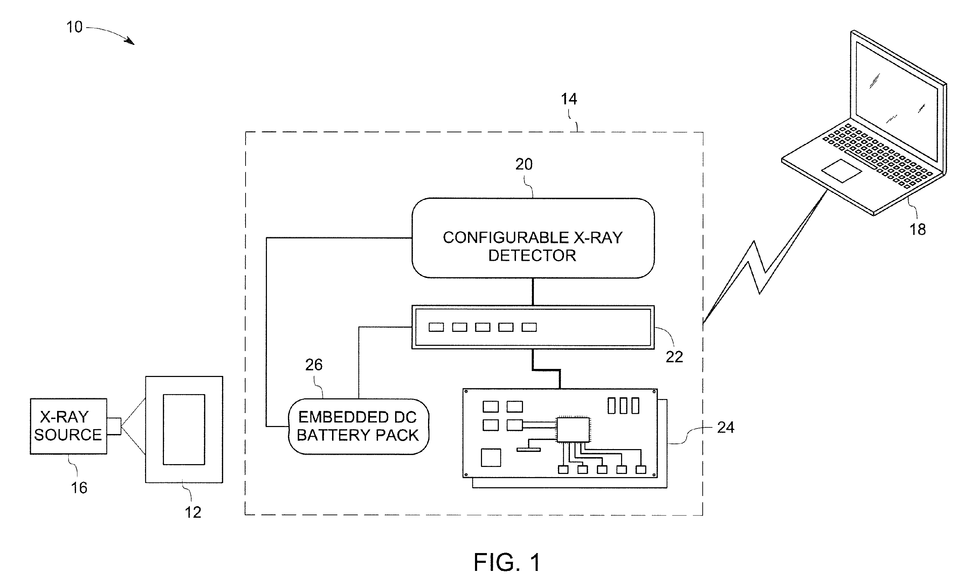

As discussed in detail below, embodiments of the present technique function to provide a small area, wireless detector assembly configured to generate, process and transmit a digital x-ray image for non-destructive testing (NDT) applications used in industrial applications such as aerospace and oil and gas industries for detecting product structural flaws and foreign object contaminations. Referring now to the drawings, FIG. 1 illustrates a NDT x-ray detector system 10 for inspecting an object 12 through a detector assembly 14. The inspection object 12 is placed between an x-ray source 16 and the detector assembly 14. In operation, the x-ray source 16 transmits x-rays directed towards the inspection object 12. Further, the detector assembly 14 generates image data corresponding to the inspection object 12 based on radiation incident thereon from the x-ray source 16. In the illustrated embodiment, a user interface device 18 is provided and is configured to receive the image data from the detector assembly 14 for use in a NDT application. In one embodiment, the user interface device 18 includes a laptop.

The detector assembly 14 includes a configurable x-ray detector 20 for generating the image corresponding to the inspection object 12. In this exemplary embodiment, the configurable x-ray detector 20 includes a small area detector having an area no greater than 10.2 centimeters (cm) × 10.2 centimeters (cm). Further, an image resolution of the configurable x-ray detector 20 is about 1k × 1k pixels with a pixel size of about 50 microns to about 100 microns. In certain embodiments, a weight of the detector assembly 14 is less than or equal to about 2.27 kg. In one embodiment, the configurable x-ray detector 20 includes a complementary metal oxide semiconductor (CMOS) detector.

According to particular embodiments, the configurable x-ray detector 20 includes a scintillator material that is selected to minimize a dose required by the image. For example, a high-resolution scintillator material, such as Min R Med, may be used for higher doses. Examples of the scintillator material include, but are not limited to, Gadolinium Oxysulfide (GOS), Cesium Iodide (CsI) and fiber optic scintillators. According to more particular embodiments, the configurable x-ray detector 20 is characterized by a scintillator pixel size and a pitch that may be selected based upon a desired application thereby making them usable for a vast range of NDT applications. According to a particular embodiment, the user interface device 18 includes software that facilitates real time interactive control of the configurable x-ray detector 20 and the x-ray source 16.

In the illustrated embodiment, the detector assembly 14 includes an embedded controller 22 coupled to the configurable x-ray detector 20 and configured to control the configurable x-ray detector 20. In this exemplary embodiment, the embedded controller 22 is based on a PC/104 platform. The configurable x-ray detector 20 is in communication with the embedded controller 22 through a universal serial bus (USB), or Ethernet, or frame grabber. However, other types of communication protocols may be envisaged. In this embodiment, the embedded controller 22 is configured to format image data from the configurable x-ray detector 20 for wireless transmission. The formatted image data from the embedded controller 22 is wirelessly transmitted to the user interface device 18 through a wireless transmission device 24. In this exemplary embodiment, the wireless transmission device 24 includes a 802.11 pre-N wireless protocol that is configured to wirelessly transmit the image data to the user interface device 18 within a range of about 30.48 meters (m). However, other commercially available wireless protocols may be employed as the wireless transmission device 24.

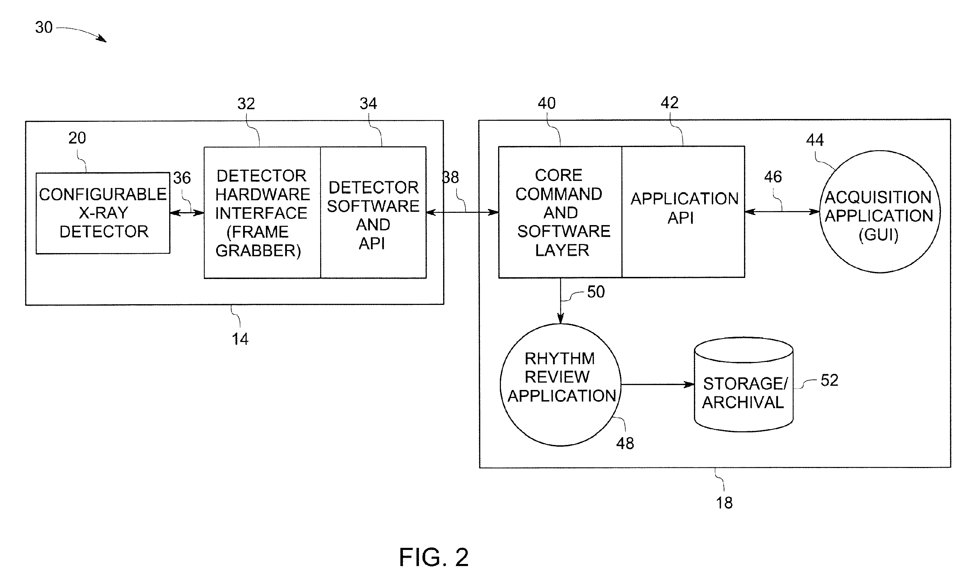

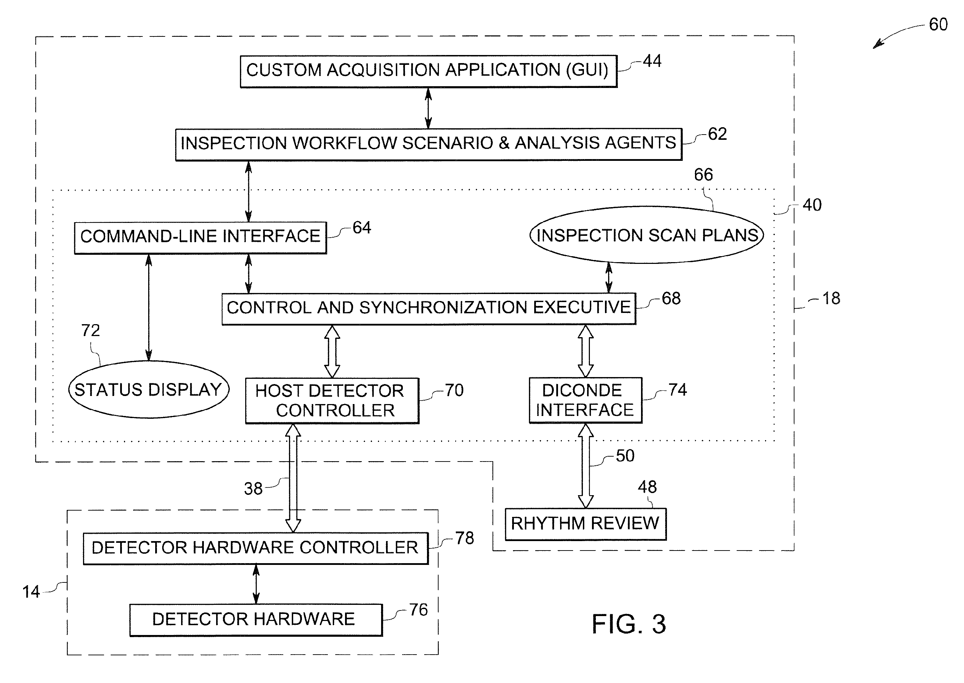

Moreover, the detector assembly 14 includes a power storage device 26 for providing electrical power to the configurable x-ray detector 20 and to the embedded controller 22. In one example, the power storage device 26 includes a rechargeable battery having a size of less than about 2.54 cm × 8.89 cm × 8.89 cm and having an operation time of at least 30 minutes. For this example, the rechargeable battery has a maximum discharge capability of about 2 Ampere (A) and is able to produce voltage of about 14.4 volts (V). The detector assembly 14 and the user interface device 18 include a software architecture to facilitate the generation and processing of the image data that will be described below with reference to FIGS. 2 and 3.

FIG. 2 is a diagrammatical representation of exemplary software architecture 30 of the NDT x-ray detector system 10 of FIG. 1. The components of the architecture of the detector assembly 14 include a detector hardware interface 32 and a detector software and application program interface (API) 34. In the illustrated embodiment, the detector hardware interface 32 is coupled to the configurable x-ray detector 20 via a hardware cable 36. The detector software and API 34 facilitates the control of the configurable x-ray detector 20 and is configured to format image data from the configurable x-ray detector 20 for wireless transmission to the user interface device 18.

In the illustrated embodiment, the image data from the detector assembly 14 are transmitted to the user interface device 18 through wireless Ethernet socket 38. In particular, the data from the detector software and API 34 are transmitted to a core command and control software layer 40 and an application API 42 for processing the image data received from the detector assembly 14. The core command and control software layer 40 includes a plurality of software modules to facilitate processing of the image data and the control of the detector assembly 14. The details of such modules will be discussed in detail below with reference to FIG. 3.

Moreover, the components of the user interface device architecture also include an acquisition application 44, which is in communication with the core command and control software layer 40, and the application API 42 through a software TCP/IP socket 46. In this embodiment, the acquisition application 44 includes a graphical user interface (GUI) configured to receive an operator input for setting up and launching the various tasks associated with the workflow. Further, the GUI 44 includes display of a plurality of screens to the operator of the system for gathering the required inputs. Further, such inputs may be utilized by the core command and control software layer 40 to control the parameters of the detector assembly 14 as well as the x-ray source 16 (see FIG. 1).

In the illustrated embodiment, the core command and control software layer 40 is configured to save the image data from the detector assembly 14 in a pre-determined format. Examples of pre-determined formats include tiff, jpeg and so forth. According to a particular embodiment, the core command and control software layer 40 is configured to save the image data from the detector assembly 14 in a DICONDE format. Beneficially, by storing such images in the DICONDE format, the images may then be analyzed by NDT applications, such as the commercially available GE Rhythm Review application, which is available from GE Inspection Technologies, located in Lewistown, Pennsylvania. In particular, such image data is transmitted to an image viewer system 48 through a network connection of arbitrary Physical Layer (e.g., Ethernet) 50 for real time monitoring of the image data. Subsequently, such image data may be stored in an archival system 52 for future use. In this exemplary embodiment, the image viewer system 48 includes the commercially available GE Rhythm Review application. However, other types of image viewer systems may be envisaged.

FIG. 3 is a diagrammatical representation of components 60 of the software architecture 30 of the NDT x-ray detector system of FIG. 2. As described earlier, the NDT x-ray detector system includes a detector assembly 14. A user interface device 18 is also provided. The image data acquired by the detector assembly 14 is wirelessly transmitted to the user interface device 18 via the wireless Ethernet 38. In the illustrated embodiment, the architecture for the user interface device 18 includes the acquisition application (GUI) 44 for receiving the operator input to facilitate the set up and launch of the various tasks in the workflow. Further, a workflow agent layer 62 having inspection workflow scenario and analysis agents is coupled to the GUI 44. In particular, the workflow agent layer 62 includes task-oriented options for initialization, calibration and inspection that orchestrate image acquisition and image analysis through the system.

The user interface device architecture further includes the core command and control software layer 40 that is configured to receive the inputs from the workflow agent layer 62. In this exemplary embodiment, the core command and control software layer 40 includes a command line interface 64 and inspection scan plans 66. In operation, the command line interface 64 enables the workflow agent to send commands to a control and synchronization executive 68. Further, the inspection scan plans 66 include scripts that encapsulate commands in a pre-determined workflow order that may be selected by the workflow agent as an input to the command line interface 64.

The control and synchronization executive 68 receives the commands from the command line interface 64 and subsequently processes the commands. In addition, the control and synchronization executive 68 sends detector commands to a host detector controller 70 and also prepares status and error messages for display to the operator. Such status and error messages are displayed to the operator through the status display 72. In operation, the host detector controller 70 acts as a server for retrieving the images and processing the images for any required image correction to prepare the image data in a pre-determined format such as DICONDE, or DICOM format. Such processed image data is subsequently transmitted to the imager viewer system 48 through a DICONDE interface 74. In one embodiment, the image data from the DICONDE interface 74 are transmitted to the imager viewer system 48 via Ethernet 50.

In the illustrated embodiment, the image viewer system 48 includes Rhythm Review application 48. In one embodiment, the Rhythm Review application 48 may be installed on the onboard user interface device 18 such as an onboard laptop. In an alternate embodiment, the image data may be transmitted to a remote image viewer system for remote review of the image data.

In the illustrated embodiment, the detector assembly 14 includes detector hardware 76 and a hardware detector controller 78 coupled to the detector hardware 76. The hardware detector controller 78 is configured to maintain the wireless interface as a client to the host detector controller 70. Further, the hardware detector controller 78 operates the interface to the detector hardware 76 to setup and retrieve images from the detector hardware 76. Subsequently, the retrieved images from the detector hardware 76 are transferred to the host detector controller 70 via a wireless interface 38.

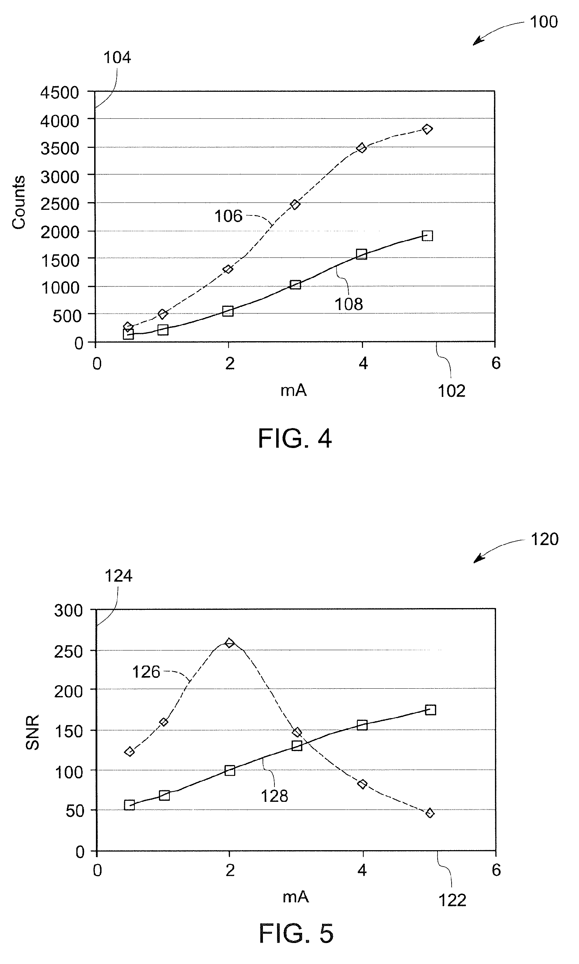

The detector assembly 14 described above employs the configurable x-ray detector 20 that can be configured for use in a vast range of applications depending upon a desired range of resolution. In the illustrated embodiment, the configurable x-ray detector 20 comprises a scintillator material that is selected to minimize a dose required by the image. Further, the configurable x-ray detector 20 is characterized by a scintillator pixel size and a pitch and at least one of the scintillator pixel size and the pitch may be selected based upon a desired NDT application. FIGS. 4-6 illustrate the performance of an exemplary CMOS detector using two exemplary scintillators.

FIG. 4 is a graphical representation of counts 100 obtained with an exemplary complementary metal oxide semiconductor (CMOS) detector using two exemplary scintillators. The abscissa axis 102 represents the input supply current in miliampere (mA), and the ordinate axis 104 represents the sensitivity of the detector in terms of the measured number of counts. In the illustrated embodiment, the counts obtained with a CMOS detector using a Lanex Fast Front scintillator material at about 30 kV-48 mm pixels are represented by the profile 106. Further, the counts obtained with a CMOS detector using a Min R Medium scintillator material at about 30 kV- 48 mm pixels are represented by the profile 108. For each of the scintillators, the estimation of mean and standard deviation is performed for a 200x200 pixels central region of interest (ROI), and the source to detector distance is 70 cm along with a 1mm Al filter. In addition, the dose rate is about 2.5 R/min at about 5 mA current. As can be seen, the counts 106 obtained with the CMOS detector with the Lanex Fast Front scintillator material are relatively higher than the counts 108 obtained with the CMOS detector with the Min R Medium scintillator material. The signal-to-noise ratios (SNR) for the CMOS detector with these two scintillators are illustrated with reference to FIG. 5.

FIG. 5 is a graphical representation of signal-to-noise ratios (SNR) 120 for the CMOS detector equipped with the two exemplary scintillators described above. The abscissa axis 122 represents the input supply current in miliampere (mA), and the ordinate axis 124 represents the SNR. In the illustrated embodiment, the SNR profile for the CMOS detector using a Lanex Fast Front scintillator material is represented by the profile 126. Further, the SNR profile for CMOS detector using a Min R Medium scintillator material is represented by the profile 128. As can be seen, the CMOS detector having the Lanex Fast Front scintillator material has a higher SNR (about 1.5 times) as compared to the CMOS detector using a Min R Medium scintillator material. Further, the maximum SNR achieved for the Lanex Fast Front scintillator material is achieved at about 50% to about 60% lower input exposure as compared to the Min R Medium scintillator material.

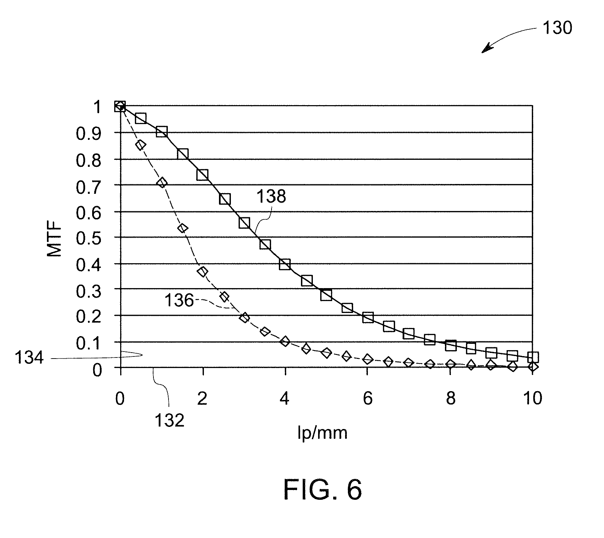

FIG. 6 is a graphical representation of the modulation transfer function (MTF) 130 achieved using the CMOS detector with the two scintillators described above. The abscissa axis 132 represents the resolution in lines pair per millimeter (lp/mm), and the ordinate axis 134 represents the MTF. In the illustrated embodiment, the MTF profile for the CMOS detector using a Lanex Fast Front scintillator material is represented by the profile 136. Further, the MTF profile for CMOS detector using a Min R Medium scintillator material is represented by the profile 138. In this exemplary embodiment, the MTF is measurement is performed using the edge method, with the edge being placed in front of the detector. As can be seen, the detector having Min R Medium scintillator material has about 50% MTF at 2.8 lp/mm resolution, and the detector having the Lanex Fast Front scintillator material has about 50% MTF at 1.7 lp/mm. Further, a limiting MTF of about 10% for the detector having the Min R Medium scintillator material and the Lanex Fast Front scintillator is at a resolution of 7.5 lp/mm and 8.5 lp/mm respectively. Thus, the Min R Medium scintillator material has a substantially higher MTF as compared to the Lanex Fast Front scintillator.

As will be appreciated by one skilled in the art, a scintillator material may be selected for the configurable x-ray detector 20 to achieve the desired performance for use in a particular NDT application. Further, the detector array pixel size and pitch may be selected based upon the desired application. Thus, the configurable x-ray detector 20 may employ different scintillator materials along with different scintillator and pixel pitch combinations to cover diverse NDT applications including low dose or high resolution imaging.

The various aspects of the method described hereinabove have utility in different NDT applications, such as in aerospace and oil and gas industries. The technique described above allows field inspection of composite or other aerospace structures. Furthermore, the technique described here provides a small area wireless detector system that can be maneuvered into tight access locations or manipulated by a robotic system and can wirelessly transmit the image data to a remote user interface device. Advantageously, the detector system described above has the capability to provide real time and static x-ray image that is controlled entirely by a remote user interface device such as a laptop. The detector system may be employed to provide near-real time x-ray imaging to study previously identified anomalous visual or UT indications of the objects of interest. Additionally, the system includes the hardware and software for generating, processing and transmitting the image data to the remote user interface device for review via an image viewer system. Further, the detector system can be customized for different types of detectors thereby facilitating use of such system in multiple NDT applications.

The detector system described above allows for x-ray inspection to be used in more "field" inspection scenarios due to its reduced weight and size. Advantageously, this technique will allow critical flaws, part damage or wear to be identified at the location of use for the part or mechanical system. Specifically, the light weight enables the detector to be used with robotic manipulation systems that have low weight limits. Furthermore, the detector system, by using a digital x-ray detector, requires less x-ray exposure than film thereby allowing for lower x-ray shielding requirements. The lower shielding requirement enables further on-site or field x-ray applications.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A detector assembly (14), comprising:
a configurable x-ray detector (20) having an area no greater than 10.2 centimeters (cm) x 10.2 centimeters (cm);
an embedded controller (22) coupled to the configurable x-ray detector (20) and configured to control the configurable x-ray detector (20) and to format image data from the configurable x-ray detector (20) for wireless transmission;
a wireless transmission device (24) configured to wirelessly transmit the image data to a user interface device (18); and
a power storage device (26) configured to provide electrical power to the configurable x-ray detector (20), the wireless transmission device (24) and to the embedded controller (22).

2. The detector assembly (14) of claim 1, wherein the configurable x-ray detector (20) comprises a scintillator material that is selected from a group consisting of Cesium Iodide (CsI), Gadolinium Oxysulfide (GOS), fiber optic scintillators and combinations thereof.

3. The detector assembly (14) of claim 1 or claim 2, wherein an image resolution of the configurable x-ray detector (20) is about 1k×1k pixels having a pixel size of about 50 microns to about 100 microns.

4. The detector assembly (14) of any preceding claim, wherein the wireless transmission device (24) comprises a 802.11 wireless protocol and is configured to wirelessly transmit the image data to the user interface device (18) within a range of about 30.48 meters (m).

5. The detector assembly (14) of any preceding claim, wherein the power storage device (26) comprises a rechargeable battery having a size of less than about 2.54 cmx8.89 cmx8.89 cm and having an operation time of at least 60 minutes.

6. The detector assembly (14) of any preceding claim, wherein the user interface device (18) is configured to save the image data from the configurable x-ray detector (20) in a DICONDE format for use in a non-destructive testing (NDT) application.

7. A detector assembly (14), comprising:
a configurable x-ray detector (20);
an embedded controller (22) coupled to the configurable x-ray detector (20) and configured to control the detector (20) and to format image data from the configurable x-ray detector (20) for wireless transmission;
a wireless transmission device (24) configured to wirelessly transmit the image data to a user interface device (18); and
a power storage device (26) configured to provide electrical power to the configurable x-ray detector (20), the wireless transmission device (24) and to the embedded controller (22), wherein a weight of the detector assembly (14) is less than or equal to 2.27 kg.

8. An inspection system (10), comprising:
a detector assembly (14) configured to obtain image data corresponding to an object (12), wherein the detector assembly (14) comprises:
a configurable x-ray detector (20) having an area no greater than 10.2 cmx 10.2 cm;
an embedded controller (22) coupled to the configurable x-ray detector (20) and configured to control the configurable x-ray detector (20) and to format image data from the configurable x-ray detector (20) for wireless transmission;
a wireless transmission device (24) configured to wirelessly transmit the image data; and
a power storage device (26) configured to provide electrical power to the configurable x-ray detector (20), the wireless transmission device (24) and to the embedded controller (22); and
a user interface device (18) configured to receive the image data from the configurable x-ray detector (20) via the wireless transmission device (24) and to save the image data in a pre-determined format for use in a non-destructive testing (NDT) application.

9. The inspection system (10) of claim 8, wherein the pre-determined format comprises a tiff format, or a jpeg format, or an image file format including raw binary data.

10. The inspection system (10) of claim 8 or claim 9, further comprising an image viewer system (48) coupled to the user interface device (18) for real time monitoring of the image data.
